# EUROPÄISCHE PATENTSCHRIFT

(11) **EP 1 556 577 B1**
(45) Veröffentlichungstag und Bekanntmachung des Hinweises auf die Patenterteilung: **13.12.2006**
(21) Anmeldenummer: 03755537.2
(22) Anmeldetag: 21.10.2003
(51) Int. Cl.: E21B 17/046, F16D 1/108, F16D 1/027

(54) **VORRICHTUNG ZUM VERBINDEN VON ZWEI IM WESENTLICHEN STANGEN- BZW. ROHRFÖRMIGEN ELEMENTEN**
DEVICE FOR CONNECTING TWO ELEMENTS HAVING A SUBSTANTIALLY CYLINDRICAL OR TUBULAR SHAPE
DISPOSITIF POUR RACCORDER DEUX ELEMENTS PRATIQUEMENT EN FORME DE BARRES OU DE TUBES

(30) Priorität: 22.10.2002 AT 16032002
(43) Veröffentlichungstag der Anmeldung: 27.07.2005
(73) Patentinhaber: "ALWAG" Tunnelausbau Gesellschaft m.b.H., 4061 Pasching (AT)
(72) Erfinder: MOCIVNIK, Josef, A-8753 Fohnsdorf (AT); EGGER-MOCIVNIK, Renè, A-8750 Judenburg (AT)
(74) Vertreter: Miksovsky, Alexander
(86) Internationale Anmeldenummer: PCT/AT2003/000316
(87) Internationale Veröffentlichungsnummer: WO 2004/038168

(56) Entgegenhaltungen:
- WO-A-97/41377
- FR-E- 21 104
- US-A- 4 513 488
- US-A- 5 304 012
- US-B1- 6 189 632

## Beschreibung

Die vorliegende Erfindung bezieht sich auf eine Vorrichtung zum Verbinden von zwei im wesentlichen stangen- bzw. rohrförmigen Elementen, beispielsweise von Teilen eines Gestänges einer Bohrvorrichtung und/oder eines Gestängeelements mit einer Bohrkrone bzw. einem Bohrkopf, wobei die miteinander zu verbindenden Elemente jeweils mit einem aufzunehmenden Ende und einem dazu komplementären, aufnehmenden Ende ausgebildet sind oder aneinander angrenzende Enden jeweils von einer Muffe bzw. Hülse übergriffen sind, wobei an dem aufnehmenden Ende bzw. der Muffe wenigstens ein im wesentlichen in radialer Richtung der Verbindung zum aufzunehmenden Ende verlagerbarer bzw. eindrückbarer Teilbereich in einer komplementären Ausnehmung bzw. Vertiefung am aufzunehmenden Ende eingreifend festgelegt ist.

Vorrichtung dieser Art sind beispielsweise der US-A 5 304 012, der WO 97/41377; der US-A 4 513 488 oder der FR-21 104 E zu entnehmen.

Im Zusammenhang mit einer Verbindung von im wesentlichen stangen- bzw. rohrförmigen Elementen sind unterschiedliche Verbindungsmöglichkeiten bekannt, wobei beispielsweise Schraubverbindungen oder Rastverbindungen bzw. -kopplungen, beispielsweise nach Art eines Bajonettverschlusses, genannt werden können. Nachteilig bei diesen bekannten Verbindungen ist insbesondere die Tatsache, daß teilweise paßgenau gearbeitete Enden von miteinander zu verbindenden Elementen jeweils ineinander eingefügt und gegeneinander verdreht bzw. allgemein bewegt werden müssen, um eine gewünschte Verbindung herstellen zu können. Es ist unmittelbar einsichtig, daß beispielsweise derartige Schraubverbindungen nicht nur zeitaufwendig herzustellen sind, sondern daß auch eine hohe Positioniergenauigkeit bzw. Ausrichtung von miteinander zu verbindenden Elementen erforderlich ist, um derartige Verbindungen herzustellen, wobei eine derartig genaue Positionierung beispielsweise bei Verlängerungen von Bohrgestängen oder dgl., welche üblicherweise eine große Länge aufweisen, gegebenenfalls schwierig ist. Darüber hinaus ist im rauhen Einsatz, welchen derartige Verbindungen unterworfen sind, zeitweise eine ordnungsgemäße Verlängerung nicht ohne weiteres möglich. Weiters ist davon auszugehen, daß insbesondere nach längerem Einsatz bzw. einem Einsatz unter rauhen Umgebungsbedingungen die Verbindungsstellen entsprechend hohen Beanspruchungen unterworfen sind, so daß derartige Verbindungen teilweise nicht bzw. nur unter hohem Zeit- und Kraftaufwand wiederum gelöst werden können. Weiters ist für eine ordnungsgemäß Verbindung mittels eines Gewindes davon auszugehen, daß zur Aufnahme und Übertragung der gegebenenfalls hohen Beanspruchungen zur Durchführung der Bohrarbeit im Bereich der Gewindeverbindung eine entsprechend große Materialstärke sowohl im Bereich eines aufzunehmenden Endes als auch im Bereich eines aufnehmenden Endes vorgesehen sein muß, so daß eine bestimmte Mindestabmessung beispielsweise einer Bohrkrone oder von Gestängeteilen nicht unterschritten werden kann. Es lassen sich somit beispielsweise Bohrkronen zur Herstellung von Bohrungen bzw. Löchern mit kleinen Durchmessern nicht bereitstellen, da unter anderem berücksichtigt werden muß, daß üblicherweise das Bohrgestänge zur Zufuhr von einem Spülfluid in den Bereich der Bohrkrone und/oder zum Abtransport von abgebautem Material hohl ausgebildet sein muß und eine entsprechende lichte Weite zur Verfügung stellen muß. Zur Erzielung geringer Bohrdurchmesser wurde in diesem Zusammenhang beispielsweise vorgeschlagen, daß keine Verlängerung eines Bohrgestänges durch Schraubverbindungen vorgenommen wird, sondern daß nach Durchführung einer Bohrung über eine gewisse Länge das gesamte Bohrgestänge mit der Bohrkrone aus dem Bohrloch entfernt wird, worauf ein längeres Bohrgestänge zum Einsatz gelangt, wobei unmittelbar ersichtlich ist, daß mit einer derartigen Vorgangsweise ein entsprechend erhöhter Zeit- und Arbeitsaufwand verbunden ist.

Die vorliegende Erfindung zielt daher darauf ab, eine Vorrichtung zum Verbinden von zwei im wesentlichen stangen- bzw. rohrförmigen Elementen der eingangs genannten Art zur Verfügung zu stellen, mit welcher eine einfache und zuverlässige Verbindung von miteinander zu verbindenden Elementen gelingt. Eine derartig einfache und zuverlässige Verbindung soll hiebei insbesondere unter rauhen Umgebungsbedingungen möglich sein und ein unbeabsichtigtes Lösen bzw. Trennen der miteinander zu verbindenden Elemente in axialer Richtung bzw. Längsrichtung der verbundenen Elemente zuverlässig verhindern und einfach herstellbar sein.

Zur Lösung dieser Aufgaben ist eine Vorrichtung der eingangs genannten Art im wesentlichen dadurch gekennzeichnet, daß der eindrückbare bzw. verlagerbare Teilbereich von einem Schlitz in dem aufnehmenden Ende bzw. der Muffe begrenzt ist, welcher in der Draufsicht einen insbesondere im wesentlichen U-förmigen, eindrückbaren Teilbereich begrenzt. Ein derartiger, erfindungsgemäß vorgesehener, beispielsweise im wesentlichen U-förmiger Schlitz läßt sich mit einfachen Mitteln und dementsprechend rasch im Bereich des aufnehmenden Endes oder einer Muffe bzw. Hülse herstellen, worauf in weiterer Folge nach Einsetzen bzw. Einführen des aufzunehmenden Endes eine Verbindung der miteinander zu verbindenden Elemente durch ein einfaches Eindrücken bzw. Verlagern oder Einschlagen des durch den Schlitz begrenzten Teilbereichs in die komplementäre bzw. entsprechende Vertiefung bzw. Ausnehmung am aufzunehmenden Ende möglich wird.

Da erfindungsgemäß am aufnehmenden Ende ein verlagerbarer bzw. eindrückbarer Teilbereich in eine komplementäre Vertiefung bzw. Ausnehmung am aufzunehmenden Ende des zweiten Elements der herzustellenden Verbindung eingreift und in dieser Vertiefung bzw. Ausnehmung im wesentlichen formschlüssig aufgenommen wird, wird eine einfache Kopplung bzw. Verbindung der miteinander zu verbindenden Elemente entweder unmittelbar über das aufnehmende Ende, in welches das aufzunehmende Ende eintaucht, oder unter Vermittlung einer entsprechenden Muffe bzw. Hülse sichergestellt. Der eindrückbare bzw. einschlagbare Teilbereich greift in die entsprechende Ausnehmung am aufnehmenden Ende ein und durch das Anordnen des eindrückbaren Teilbereichs bzw. des Fortsatzes wird zuverlässig eine Lösung bzw. Trennung der miteinander zu verbindenden Elemente in axialer Richtung bzw. Längsrichtung verhindert. Darüber hinaus ist unmittelbar einsichtig, daß die erfindungsgemäß vorgeschlagene Verbindung durch ein einfaches Einfügen bzw. Ineinanderstecken entweder der miteinander zu verbindenden Elemente oder durch ein Einfügen von aufnehmenden Elementen in eine Muffe bzw. Hülse ausreichend ist, worauf nach einer gewünschten Positionierung in relativer, axialer Lage ein eindrückbarer bzw. einschlagbarer Teilbereich in die Vertiefung bzw. Ausnehmung des aufnehmenden Teils eingeschlagen wird und somit rasch und sicher die gewünschte Verbindung erzielbar ist. Darüber hinaus wird durch den erfindungsgemäß vorgesehenen, verlagerbaren bzw. eindrückbaren Teilbereich an miteinander zusammenwirkenden Enden nicht nur eine zuverlässige Steckverbindung zur Verfügung gestellt, sondern es kann zur Aufrechterhaltung der Steckverbindung auch mit entsprechend geringeren Materialstärken das Auslangen gefunden werden, so daß auch kleine Durchmesser von Bohrungen bzw. Bohrlöchern zur Verfügung gestellt werden können. Durch eine derartige Steckverbindung läßt sich gegenüber einer Gewindeverbindung auch eine bessere Kraftübertragung erzielen, da entsprechend große Anschlagflächen bzw. Aufnahmeflächen zwischen den einzelnen Elementen einer Steckverbindung zur Verfügung gestellt werden können, während bei einem Gewinde, insbesondere nach einem Verschleiß durch hohe Beanspruchungen, lediglich geringe Anlageflächen, beispielsweise in Form einer Linienberührung, zur Verfügung stehen.

Für ein gegebenenfalls gewünschtes Lösen einer derartigen Verbindung genügt bei einer entsprechenden Orientierung der Vertiefung bzw. Ausnehmung sowie des einschlagbaren Teilbereichs eine entsprechende Beaufschlagung in axialer Richtung, welche die durch den einschlagbaren bzw. eindrückbaren Teilbereich zur Verfügung gestellte Verbindungskraft überwindet, um die miteinander verbundenen Elemente voneinander zu trennen. Es ist einsichtig, daß bei der erfindungsgemäß vorgeschlagenen Verbindung auf eine übermäßig genaue Justierung bzw. Ausrichtung der gegebenenfalls eine große Länge aufweisenden, miteinander zu verbindenden Elemente verzichtet werden kann und daß weiters keinerlei gegenseitige Dreh- bzw. Rotationsbewegungen zur Herstellung bzw. Vervollständigung der Verbindung erforderlich sind, wie dies beispielsweise im Stand der Technik bei Schraubverbindungen oder Bajonettkopplungen oder dgl. erforderlich ist. Eine derartige, erfindungsgemäß vorgeschlagene Verbindung läßt sich somit auch unter rauhen Umgebungsbedingungen, beispielsweise bei der Herstellung eines Bohrlochs in Boden- oder Gesteinsmaterial oder bei Einsatz an einer Stichloch-Bohrmaschine zeit- und kostensparend sowohl für die Herstellung einer Verbindung als auch für eine gegebenenfalls erforderliche Trennung der Verbindung nach einem Einsatz unter hohen Beanspruchungen der Verbindungsstellen zur Verfügung stellen.

Bei Verwendung einer Muffe bzw. Hülse für ein Verbinden von rohr- bzw. stangenförmigen Elementen wird gemäß einer weiters bevorzugten Ausführungsform der Erfindung vorgeschlagen, daß eine Muffe bzw. Hülse zum Verbinden von aneinander angrenzenden Enden von rohrförmigen Elementen mit zwei verlagerbaren bzw. eindrückbaren Teilbereichen ausgebildet ist, welche entgegengesetzt zueinander orientiert sind. Gegebenenfalls erforderlichen, unterschiedlichen Krafteinwirkungen zur Herstellung einer gewünschten Verbindungskraft im Bereich der Muffe kann durch entsprechende Positionierung oder Anordnung der jeweils eindrückbaren bzw. verlagerbaren Teilbereiche an unterschiedlichen Teilbereichen der Muffe, welche mit den zwei voneinander verschiedenen Enden der miteinander zu verbindenden Enden zusammenwirken, Rechnung getragen werden.

Für eine ebenfalls besonders einfache und somit kostengünstige und zeitsparende Ausbildung der entsprechenden Vertiefung bzw. Ausnehmung am aufzunehmenden Ende wird darüber hinaus vorgeschlagen, daß die Ausnehmung bzw. Vertiefung am aufzunehmenden Ende von einer im wesentlichen in Längsrichtung der zu verbindenden Elemente verlaufenden Rille bzw. Nut gebildet ist, wie dies einer weiters bevorzugten Ausführungsform der erfindungsgemäßen Vorrichtung entspricht.

Wie oben bereits angedeutet, gelingt mit der erfindungsgemäß vorgeschlagenen Vorrichtung im wesentlichen eine einfach herzustellende und zuverlässige Sicherung von miteinander zu verbindenden, stangen- bzw. rohrförmigen Elementen in axialer Richtung bzw. Längsrichtung dieser Elemente. Falls die Elemente auch gegenüber einer gegenseitigen Rotationsbewegung gesichert werden sollen oder auf diese Elemente, beispielsweise bei Durchführen eines Bohrvorgangs, eine Rotationsbewegung ausgeübt wird bzw. durch derartige Elemente, beispielsweise Gestängeelemente, eine Rotationsbewegung von einem Antrieb auf ein Bohrwerkzeug übertragen werden soll, ist zur Erzielung einer entsprechenden Drehmitnahme gemäß einer weiters bevorzugten Ausführungsform vorgesehen, daß das aufzunehmende Ende und das aufnehmende Ende bzw. die Muffe jeweils eine von einer Kreisform abweichende Umfangsform, beispielsweise eine im Querschnitt hexagonale Umfangsform, aufweisen. Derartige, von einer Kreisform abweichende Umfangsformen können auch entsprechend einfach und kostengünstig sowie paßgenau hergestellt werden, so daß wiederum durch einfaches Einführen bzw. Einstecken eines aufzunehmenden Endes in ein aufnehmendes Ende bzw. in eine ein Zwischenelement ausbildende Muffe bzw. Hülse eine einfache Verbindung durch ein nachträgliches Eindrücken bzw. Verlagern der jeweiligen Teilbereiche in die entsprechenden Ausnehmungen am Außenumfang der aufzunehmenden Enden möglich ist.

Da miteinander zu verbindende, stangen- bzw. rohrförmige Elemente gegebenenfalls einen vergleichsweise hohen Materialquerschnitt aufweisen, wodurch ein Eindrücken bzw. Einschlagen der für die Verbindung vorgesehenen Teilbereiche gegebenenfalls schwierig ist bzw. eine hohe Schlagbeanspruchung erfordert, wird gemäß einer weiters bevorzugten Ausführungsform vorgeschlagen, daß der verlagerbare bzw. eindrückbare Teilbereich mit einem gegenüber den angrenzenden Endbereichen verringerten Querschnitt ausgebildet ist. Ein derartiger, verringerter Querschnitt erlaubt ein zuverlässiges Einschlagen bzw. Eindrücken der für die Verbindung vorgesehenen Teilbereiche, wobei unverändert eine ausreichende Verbindungskraft bzw. Haltekraft gegenüber einem unbeabsichtigten Lösen insbesondere in axialer Richtung zur Verfügung gestellt werden kann.

Für ein im wesentlichen formschlüssiges Anliegen des verlagerbaren bzw. eindrückbaren Teilbereichs wird gemäß einer weiters bevorzugten Ausführungsform vorgeschlagen, daß die den verlagerbaren Teilbereich aufnehmende Vertiefung bzw. Ausnehmung im aufzunehmenden Ende in Längsrichtung der miteinander zu verbindenden, rohrförmigen Elemente abgeschrägt bzw. mit zunehmender Tiefe ausgebildet ist.

Zur Ausbildung einer definierten Anschlagposition bzw. Endlage der erfindungsgemäß herzustellenden Verbindung wird gemäß einer weiters bevorzugten Ausführungsform vorgeschlagen, daß die Vertiefung bzw. Ausnehmung einen Anschlag für den eindrückbaren bzw. verlagerbaren Teilbereich in Längsrichtung der miteinander zu verbindenden, rohrförmigen Elemente ausbildet.

Neben einer Verwendung der erfindungsgemäßen Vorrichtung beispielsweise zur Verbindung von Gestängeelementen eines Bohrgestänges oder dgl. kann die rasch und einfach herzustellende Verbindung gemäß der erfindungsgemäßen Vorrichtung auch für ein Festlegen beispielsweise einer Bohrkrone bzw. eines Bohrkopfs an einem Bohrgestänge Verwendung finden. In diesem Zusammenhang wird hiebei vorgeschlagen, daß das aufnehmende Ende von einer an dem von der Bohrfläche einer Bohrkrone abgewandten Ende ausgebildeten Muffe bzw. einem hülsenförmigen Fortsatz gebildet ist, in welche(n) ein aufzunehmendes Ende eines Gestängeelements einbringbar ist, wie dies einer weiters bevorzugten Ausführungsform der erfindungsgemäßen Vorrichtung entspricht.

Um gegebenenfalls eine ungleichmäßige Belastung über den Umfang der miteinander zu verbindenden Elemente zu vermeiden bzw. über den Umfang verteilt eine erforderliche Verbindungs- bzw. Haltekraft zur Verfügung zu stellen, wird gemäß einer weiters bevorzugten Ausführungsform vorgeschlagen, daß über den Umfang der miteinander zu verbindenden Elemente eine Mehrzahl von verlagerbaren bzw. eindrückbaren Teilbereiche und komplementären Ausnehmungen bzw. Vertiefungen vorgesehen ist. Durch Vorsehen einer gegebenenfalls unterschiedlichen Anzahl von Verbindungsbereichen bzw. verlagerbaren bzw. eindrückbaren Teilbereichen am Außenumfang von miteinander herzustellenden Elementen können auch in unterschiedlichen Teilbereichen unterschiedliche Halte- bzw. Verbindungskräfte zur Verfügung gestellt werden, so daß durch Vorsehen einer gegebenenfalls unterschiedlichen Anzahl von Verbindungsbereichen in unterschiedlichen Teilbereichen einer längeren Verbindung für ein gewünschtes Lösen bevorzugte Stellen eines Lösens einer Verbindung von aus mehreren Elementen bestehenden Rohren bzw. Gestängen definiert werden können.

Die Erfindung wird nachfolgend anhand von in der beiliegenden Zeichnung schematisch dargestellten Ausführungsbeispielen näher erläutert. In dieser zeigen:
Fig. 1 eine schematische Seitenansicht einer ersten Ausführungsform einer erfindungsgemäßen Vorrichtung;
Fig. 2 in einer zu Fig. 1 ähnlichen Darstellung eine abgewandelte Ausführungsform;
Fig. 3 in gegenüber Fig. 1 und 2 vergrößertem Maßstab einen Teilschnitt durch eine erfindungsgemäße Vorrichtung zur Herstellung einer Verbindung zwischen einer Bohrkrone und einem daran anschließenden Gestängeelement; und
Fig. 4 eine teilweise Schnittansicht in Richtung des Pfeils IV der Fig. 3.

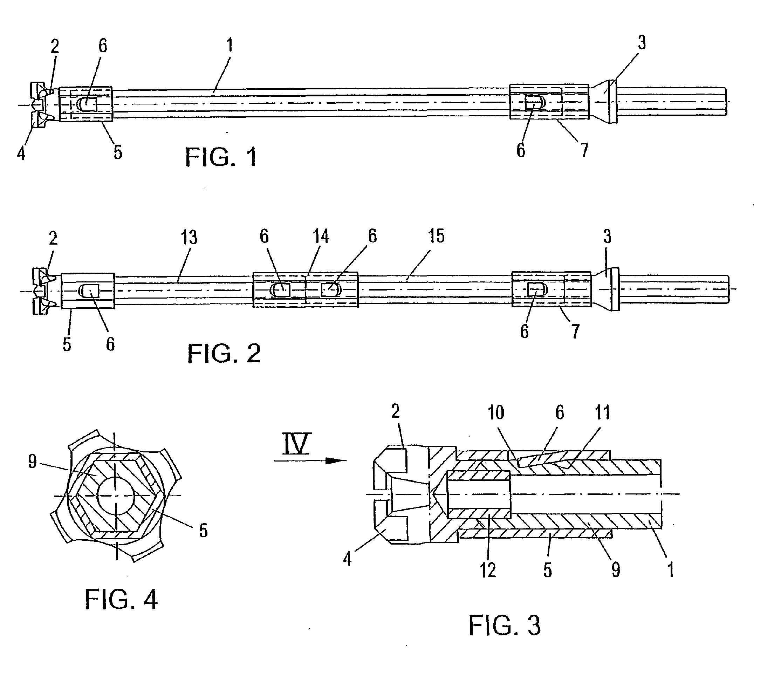

In Fig. 1 ist mit 1 ein rohrförmiges Gestängeelement bezeichnet, welches einerseits an einer Bohrkrone bzw. einem Bohrwerkzeug 2 festlegbar bzw. mit diesem verbindbar sein soll und andererseits an seinem von der Bohrkrone 2 abgewandten Ende über ein Schlagelement 3 mit einem nicht näher dargestellten und an dem Schlagelement 3 angreifenden Antrieb, beispielsweise einem Antrieb zum Drehschlagbohren, verbunden ist.

Die Verbindung des Bohrgestänges 1 sowohl mit der Bohrkrone 2 als auch dem Schlagelement 3 erfolgt im Bereich der Bohrkrone 2 durch ein Eintauchen des Gestängeelements 1 in einen an dem von der Abbaufläche 4 der Bohrkrone 2 abgewandeten Ende vorragenden Fortsatz 5, wobei der Fortsatz 5 an seinem Außenumfang einen verlagerbaren bzw. eindrückbaren Teilbereich 6 aufweist, welcher in eine entsprechende Ausnehmung bzw. Rille am Außenumfang des aufzunehmenden Endes des Bohrgestänges 1 eintritt, wie dies im Detail in Fig. 3 näher dargestellt ist.

In ähnlicher Weise ist das zum Schlagelement 3 gewandte Ende des Bohrgestänges 1 über eine Muffe 7 mit dem Schlagelement 3 verbunden, wobei auch die Muffe 7 einen verlagerbaren bzw. eindrückbaren Teilbereich 6 aufweist, welcher wiederum in eine entsprechende Ausnehmung bzw. Vertiefung am Außenumfang des aufzunehmenden Endes des Gestänges bzw. Rohrs 1 eintaucht.

Aus der Darstellung gemäß Fig. 3 ist ersichtlich, daß an dem von der Abbaufläche 4 abgewandten Ende die Bohrkrone bzw. der Bohrkopf 2 einen hülsenartigen Fortsatz 5 aufweist, in welchen das aufzunehmende Ende 9 des Bohrgestänges bzw. rohrförmigen Elements 1 eintaucht. In dem in Fig. 3 dargestellten, verbundenen Zustand ist der verlagerbare bzw. eindrückbare oder einschlagbare Teilbereich 6 in einer entsprechenden Ausnehmung bzw. Vertiefung 10 am Außenumfang des aufzunehmenden Endes 9 aufgenommen. Die Vertiefung bzw. Ausnehmung 10 ist mit einer abgeschrägten bzw. geneigten Fläche 11 versehen, an welche der einschlagbare bzw. eindrückbare Teilbereich 6 in Anlage gelangt, wenn er ausgehend von der mit den anschließenden Teilbereichen fluchtenden Lage in Eingriff in die Vertiefung bzw. Ausnehmung 10 gebracht wird. In Fig. 3 ist darüber hinaus ein hülsenförmiger Zentrierfortsatz 12 im Bereich der Bohrkrone 2 angedeutet.

Aus der teilweisen Schnittdarstellung gemäß Fig. 4 ist weiters ersichtlich, daß sowohl der hülsenförmige Fortsatz 5 der Bohrkrone 2 als auch das aufzunehmende Ende 9 des Gestänges 1 einen von einer Kreisform abweichenden Querschnitt aufweisen, so daß über die in Fig. 4 dargestellte, beispielsweise hexagonale Querschnittsform bzw. Umfangsform eine Drehmitnahme der Bohrkrone 2 bei einer Drehbeaufschlagung des Gestänges 1 möglich ist, während durch den in die Ausnehmung 10 eingreifenden Teilbereich 6 des hülsenförmigen Fortsatzes 5 eine zuverlässige Sicherung gegenüber einer Verlagerung bzw. einem Lösen in axialer Richtung zur Verfügung gestellt wird. Sollte das Gestänge 1 nach Fertigstellung einer Bohrarbeit beispielsweise von der Bohrkrone 2 getrennt werden, so muß eine die Verbindungskraft übersteigende Kraft in Richtung eines Entfernens des rohrförmigen Elements 1 von der Bohrkrone 2 auf das rohrförmige Element 1 ausgeübt werden, so daß unter Deformation des in der Ausnehmung 10 aufgenommenen Teilbereichs 6 eine Trennung zwischen dem rohrförmigen Element 1 und der Bohrkrone 2 erfolgt.

Ähnlich wie die Verbindung zwischen der Bohrkrone 2 bzw. deren hülsenförmigem Fortsatz 5 und dem aufzunehmenden Ende 9 des Gestänges 1 erfolgt auch die Verbindung zwischen der Muffe 7 des Schlagelements 3 und dem der Bohrkrone 2 gegenüberliegenden bzw. abgewandten Ende des Gestänges 1.

In Fig. 2 ist eine abgewandelte Ausführungsform dargestellt, wobei neben einer Verbindung eines mit 13 bezeichneten Gestängeelements mit einer wiederum mit 2 bezeichneten Bohrkrone über einen eindrückbaren bzw. einschlagbaren Teilbereich 6 eine Verlängerung des Bohrgestänges durch eine Muffe 14 erfolgt, über welche das rohrförmige Element 13 mit einem weiteren, rohrförmigen Element 15 verbunden wird, welches in weiterer Folge wiederum mit einem Schlagelement 3 verbunden ist. Für eine sichere bzw. zuverlässige Verbindung insbesondere in axialer Richtung bzw. Längsrichtung sind wiederum verlagerbare bzw. eindrückbare oder einschlagbare Teilbereiche 6 an dem hülsenförmigen Fortsatz 5 der Bohrkrone 2, an der Muffe 14 sowie an der Muffe 7 des Schlagelements 3 vorgesehen, so daß ähnlich wie bei der Ausführungsform gemäß Fig. 1 und 3 wiederum eine entsprechend einfach und rasch herzustellende Verbindung zwischen einzelnen, rohrförmigen Elementen 13 und 15 möglich wird.

Anstelle der in den Figuren gezeigten Verbindung im wesentlichen unter Einsatz von muffenförmigen Zwischenelementen 5, 7 und 14 kann eine Verbindung auch dadurch erfolgen, daß ein Muffenende bzw. aufnehmendes Ende eines rohr- bzw. stangenförmigen Elements unmittelbar ein aufzunehmendes Ende eines zweiten, rohr- bzw. stangenförmigen Elements bzw. Spitzendes desselben übergreift, wobei die Verbindung wiederum durch den wenigstens einen in Richtung zum aufzunehmenden Ende verlagerbaren bzw. einschlagbaren Teilbereich 6 erfolgt.

Um bei gegebenenfalls größeren Querschnitten eine ungleichmäßige Belastungs- bzw. Verbindungskraft zu vermeiden, kann vorgesehen sein, daß im wesentlichen gleichmäßig verteilt eine Mehrzahl von jeweils eindrückbaren bzw. einschlagbaren Teilbereichen 6 über den Umfang einer Verbindungsstelle verteilt vorgesehen ist.

Wie aus den Zeichnungen ersichtlich, kann mit geringer Materialstärke bzw. Wandstärke der einander übergreifenden Teilbereiche, beispielsweise sowohl des hülsenförmigen Fortsatzes 5 als auch des Bohrgestänges 1, bei der Darstellung gemäß Fig. 3 das Auslangen gefunden werden, so daß trotz Vorsehen einer entsprechend großen, lichten Weite im Inneren des Bohrgestänges 1 auch kleine Bohrdurchmesser hergestellt werden können. Weiters ist ersichtlich, daß im wesentlichen vollflächige aneinander anschließende Anschlagflächen zwischen miteinander verbundenen Elementen für eine ordnungsgemäße Kraftübertragung zur Verfügung gestellt werden können.

## Patentansprüche

1. Vorrichtung zum Verbinden von zwei im wesentlichen stangen- bzw. rohrförmigen Elementen (1), beispielsweise von Teilen eines Gestänges einer Bohrvorrichtung und/oder eines Gestängeelements (1) mit einer Bohrkrone bzw. einem Bohrkopf, wobei die miteinander zu verbindenden Elemente jeweils mit einem aufzunehmenden Ende und einem dazu komplementären, aufnehmenden Ende ausgebildet sind oder aneinander angrenzende Enden jeweils von einer Muffe bzw. Hülse (5, 7, 14) übergriffen sind, wobei an dem aufnehmenden Ende bzw. der Muffe (5, 7, 14) wenigstens ein im wesentlichen in radialer Richtung der Verbindung zum aufzunehmenden Ende (9) verlagerbarer bzw. eindrückbarer Teilbereich (6) in einer komplementären Ausnehmung (10) bzw. Vertiefung am aufzunehmenden Ende (9) eingreifend festgelegt ist, **dadurch gekennzeichnet, daß** der eindrückbare bzw. verlagerbare Teilbereich (6) von einem Schlitz in dem aufnehmenden Ende bzw. der Muffe (5, 7, 14) begrenzt ist, welcher in der Draufsicht einen insbesondere im wesentlichen U-förmigen, eindrückbaren Teilbereich (6) begrenzt.

2. Vorrichtung nach Anspruch 1, **dadurch gekennzeichnet, daß** eine Muffe bzw. Hülse (14) zum Verbinden von aneinander angrenzenden Enden von rohrförmigen Elementen (13, 15) mit zwei verlagerbaren bzw. eindrückbaren Teilbereichen (6) ausgebildet ist, welche entgegengesetzt zueinander orientiert sind.

3. Vorrichtung nach Anspruch 1 oder 2, **dadurch gekennzeichnet, daß** die Ausnehmung bzw. Vertiefung (10) am aufzunehmenden Ende (9) von einer im wesentlichen in Längsrichtung der zu verbindenden Elemente (1, 13, 15) verlaufenden Rille bzw. Nut gebildet ist.

4. Vorrichtung nach Anspruch 1, 2 oder 3, **gekennzeichnet**, daß das aufzunehmende Ende (9) und das aufnehmende Ende bzw. die Muffe (5, 7, 14) jeweils eine von einer Kreisform abweichende Umfangsform, beispielsweise eine im Querschnitt hexagonale Umfangsform, aufweisen.

5. Vorrichtung nach einem der Ansprüche 1 bis 4, **dadurch gekennzeichnet, daß** der verlagerbare bzw. eindrückbare Teilbereich (6) mit einem gegenüber den angrenzenden Endbereichen verringerten Querschnitt ausgebildet ist.

6. Vorrichtung nach einem der Ansprüche 1 bis 5, **dadurch gekennzeichnet, daß** die den verlagerbaren Teilbereich (6) aufnehmende Vertiefung bzw. Ausnehmung (10) im aufzunehmenden Ende (9) in Längsrichtung der miteinander zu verbindenden, rohrförmigen Elemente (1, 13, 15) abgeschrägt bzw. mit zunehmender Tiefe ausgebildet ist.

7. Vorrichtung nach Anspruch 6, **dadurch gekennzeichnet, daß** die Vertiefung bzw. Ausnehmung (10) einen Anschlag für den eindrückbaren bzw. verlagerbaren Teilbereich (6) in Längsrichtung der miteinander zu verbindenden, rohrförmigen Elemente (1, 13, 15) ausbildet.

8. Vorrichtung nach einem der Ansprüche 1 bis 7, **dadurch gekennzeichnet, daß** das aufnehmende Ende von einer an dem von der Bohrfläche (4) einer Bohrkrone (2) abgewandten Ende ausgebildeten Muffe bzw. einem hülsenförmigen Fortsatz (5) gebildet ist, in welche(n) ein aufzunehmendes Ende (9) eines Gestängeelements (1, 13) einbringbar ist.

9. Vorrichtung nach einem der Ansprüche 1 bis 8, **dadurch gekennzeichnet, daß** über den Umfang der miteinander zu verbindenden Elemente (1, 13, 15, 5, 7, 14) eine Mehrzahl von verlagerbaren bzw. eindrückbaren Teilbereiche (6) und komplementären Ausnehmungen bzw. Vertiefungen (10) vorgesehen ist.

## Claims

1. A device for connecting two substantially rod- or tube-shaped elements (1), for instance parts of a rod assembly of a drilling device and/or a rod assembly element (1) with a drill bit or a drill head, wherein the elements to be connected are each designed to comprise a male end and a complementary female end or contiguous ends are each overlapped by a bushing or sleeve (5, 7, 14), wherein on the female end or sleeve (5, 7, 14) at least one partial region (6) capable of being shifted towards the female end (9) substantially in the radial direction of the connection, and/or pressed in, is engagingly fixed in a complementary recess (10) or depression provided on the male end (9), **characterized in that** the partial region (6) capable of being pressed in and/or shifted is delimited by a slot provided in the female end or sleeve (5, 7, 14), respectively, and delimiting in top view a particularly substantially U-shaped partial region (6) capable of being pressed in.

2. A device according to claim 1, **characterized in that** a sleeve or bushing (14) for the connection of the contiguous ends of tube-shaped elements (13, 15) is designed to include two partial regions (6) capable of being shifted and/or pressed in, which are oriented in a relatively opposite relationship.

3. A device according to claim 1 or 2, **characterized in that** the recess or depression (10) provided on the male end (9) is formed by a channel or groove extending substantially in the longitudinal direction of the elements (1, 13, 15) to be connected.

4. A device according to claim 1, 2 or 3, **characterized in that** the male end (9) and the female end or sleeve (5, 7, 14) are each designed to have a peripheral shape deviating from a circular shape, for instance a peripheral shape hexagonal in cross section.

5. A device according to any one of claims 1 to 4, **characterized in that** the partial region (6) capable of being shifted and/or pressed in is designed to have a cross section reduced relative to the adjacent end regions.

6. A device according to any one of claims 1 to 5, **characterized in that** the depression or recess (10) provided in the male end (9) and receiving the displaceable partial region (6) is designed to be bevelled, or increased in depth, in the longitudinal direction of the tubular elements (1, 13, 15) to be connected.

7. A device according to claim 6, **characterized in that** the depression or recess (10) in the longitudinal direction of the tubular elements (1, 13, 15) to be connected forms a stop for the partial region (6) capable of being pressed in and/or shifted.

8. A device according to any one of claims 1 to 7, **characterized in that** the female end is formed by a sleeve or bush-shaped projection (5) provided on the end facing away from the drilling surface (4) of a drill bit (2), into which projection a male end (9) of a rod assembly element (1, 13) is introducible.

9. A device according to any one of claims 1 to 8, **characterized in that** a plurality of partial regions (6) capable of being shifted and/or pressed in and complementary recesses or depressions (10) are provided about the periphery of the elements to be connected (1, 13, 15, 5, 7, 14).

## Revendications

1. Dispositif pour relier deux éléments (1) essentiellement en forme de barres ou de tubes, par exemples des parties d'un tubage d'un dispositif de forage et/ou d'un élément de tubage (1) avec une couronne de forage ou une tête de forage, les éléments à relier l'un à l'autre étant respectivement réalisés avec une extrémité à recevoir et une extrémité réceptrice complémentaire à celle-ci, ou des extrémités adjacentes l'une de l'autre étant respectivement recouvertes par un manchon ou une gaine (5, 7, 14), au moins une zone partielle (6) sur l'extrémité réceptrice ou le manchon (5, 7, 14) pouvant être déplacée ou enfoncée essentiellement dans la direction radiale de la liaison par rapport à l'extrémité à recevoir (9) étant immobilisée en prise dans un évidement (10) ou creux complémentaire sur l'extrémité à recevoir (9), **caractérisé en ce que** la zone partielle (6) pouvant être déplacée ou enfoncée est délimitée par une fente dans l'extrémité réceptrice ou le manchon (5, 7, 14) qui délimite en vue de dessus une zone partielle (6) pouvant être enfoncée essentiellement en forme de U.

2. Dispositif selon la revendication 1, **caractérisé en ce que**, pour relier des extrémités adjacentes l'une de l'autre d'éléments (13, 15) en forme de tubes, un manchon ou gaine (14) est réalisé avec deux zones partielles (6) pouvant être déplacées ou enfoncées qui sont orientées de manière opposée l'une à l'autre.

3. Dispositif selon la revendication 1 ou 2 **caractérisé en ce que** l'évidement ou creux (10) sur l'extrémité à recevoir (9) est formé par une cannelure ou rainure s'étendant essentiellement dans la direction longitudinale des éléments (1, 13, 15) à relier.

4. Dispositif selon la revendication 1, 2 ou 3, **caractérisé en ce que** l'extrémité à recevoir (9) et l'extrémité réceptrice ou le manchon (5, 7, 14) présentent respectivement une forme périphérique différente d'une forme circulaire, par exemple une forme périphérique hexagonale en section transversale.

5. Dispositif selon l'une des revendications 1 à 4, **caractérisé en ce que** la zone partielle (6) pouvant être déplacée ou enfoncée est réalisée avec une section transversale réduite par rapport aux zones d'extrémité adjacentes.

6. Dispositif selon l'une des revendications 1 à 5, **caractérisé en ce que** le creux ou évidement (10) recevant la zone partielle (6) pouvant être déplacée dans l'extrémité réceptrice (9) est réalisé de manière biseautée ou avec une profondeur croissante dans la direction des éléments en forme de tubes (1, 13, 15) à relier l'un à l'autre.

7. Dispositif selon la revendication 6, **caractérisé en ce que** le creux ou évidement (10) forme une butée pour la zone partielle (6) pouvant être enfoncée ou déplacée dans la direction longitudinale des éléments en forme de tubes (1, 13, 15) à relier l'un à l'autre.

8. Dispositif selon l'une des revendications 1 à 7, **caractérisé en ce que** l'extrémité réceptrice est formée par un manchon ou un prolongement en forme de gaine (5) réalisé à l'extrémité détournée de la surface de forage (4) d'une couronne de forage (2), dans lequel une extrémité à recevoir (9) d'un élément de tubage (1, 13) peut être insérée.

9. Dispositif selon l'une des revendications 1 à 8, **caractérisé en ce qu'**une pluralité de zones partielles (6) pouvant être déplacées ou enfoncées et d'évidements ou creux (10) complémentaires est prévue sur la périphérie des éléments (1, 13, 15, 5, 7, 14) à relier l'un à l'autre.
